# EUROPEAN PATENT APPLICATION

(11) **EP 2 725 531 A1**
(43) Date of publication of application: **30.04.2014**
(21) Application number: 13187696.3
(22) Date of filing: 08.10.2013
(51) Int. Cl.: G06Q 10/10, G06F 3/0483

(54) **User interface for accessing books**

(30) Priority: 24.10.2012 US 201213659767
(71) Applicant: Sony Corporation, Tokyo 108-0075 (JP); Sony Network Entertainment International LLC, Los Angeles, CA 90045 (US)
(72) Inventor: Arriola, George, San Francisco, CA California 94107 (US); Schwesig, Carsten, San Francisco, CA California 94110 (US); Johnson, Brian, San Franciso, CA California 94114 (US); Bauerly, Michael, San Francisco, CA California 94114 (US)
(74) Representative: McGowan, Cathrine

(57) **Abstract**

A system and method for employing a user interface to facilitate user access to books. The example method includes displaying a band of plural adjacent tiles, wherein each tile represents a book or collection of books, and wherein the band is scrollable in response to a specific user input; and arranging adjacent tiles based on a sorting rule, wherein the sorting rule includes arranging each tile according to a recency of use of a book associated with each tile. In a more specific embodiment, the method further includes displaying content associated with a book in response to user selection of a tile associated therewith, wherein the content pertains to a most recently viewed portion of the book. A menu activatable via the band may enable access to recommendations of content based on content present in the band of plural adjacent tiles; access a library of books, and so on.

## Description

### Background Of The Invention

This invention is related in general to software and more specifically relates to user interfaces and accompanying methods for facilitating user access to and interaction with electronic books.

User interfaces for accessing electronic books are employed in various demanding applications including electronic book readers, desktop and mobile device operating systems, Web-based electronic book portals, and so on. Such user interfaces often demand user friendly mechanisms for facilitating expedient access to desired books and related book content.

In an example conventional user interface, users access electronic books that have been downloaded to an electronic book reader (also called an eBook reader). A user then employs the reader to scroll through a list of books; make a selection; then begin reading the book. However, such conventional user interfaces often lack effective features for optimally organizing electronic books and related information and facilitating rapid and efficient access to desired book content.

### Summary of the Invention

Various respective aspects and features of the invention are defined in the appended claims. Combinations of features from the dependent claims may be combined with features of the independent claims as appropriate and not merely as explicitly set out in the claims.

An example method employs a user interface to facilitate user access to books. The example method includes displaying a band of plural adjacent tiles, also called a strand, wherein each tile represents a book or collection of books, and wherein the band is scrollable in response to a specific user input; and arranging adjacent tiles based on a sorting rule, wherein the sorting rule includes arranging each tile in the band in accordance with a time of use and/or time of download of a book associated with each tile in the band.

In a more specific embodiment, the method further includes displaying content associated with a book in response to user selection of a tile associated therewith, wherein the content pertains to a most recently viewed portion of the book. The specific embodiment further includes presenting a first menu pertaining to the band in response to a first user input applied to a header or other region about the band.

The first menu includes one or more user options for performing one or more actions applicable to one or more of the tiles of the band and one or more books associated therewith. For example, the one or more user options may include a user option to access one or more recommendations of content based on content present in or indicated by the band of plural adjacent tiles. Another user option may facilitate user access to a library of books, which may also include subscriptions to electronic content, such as periodicals.

The menu includes a transparent background such that the menu appears to be overlaid upon a background wallpaper of the user interface. The specific embodiment further includes providing a user option to select a tile of the band, resulting in a display of content, such as book text, associated with the tile in response thereto. The displayed content may include a page of an electronic book corresponding to a most recently user accessed page of the book. In response to user selection of a tile of the band, an enlarged representation of the selected tile is displayed when a book associated with selected tile has not yet been accessed.. The enlarged representation of the selected tile may include a display of cover art pertaining to the book or content accessible via the enlarged tile.

The specific embodiment further includes providing a user option to select the enlarged tile, resulting in display of most recently viewed content of the book corresponding to the enlarged tile. An additional user option enables a user to navigate pages in the electronic book via one or more user interface controls positioned adjacent to a display of content of the book. Another user option enables a user to trigger audio recitation, i.e., audio playback, of text in the book, such as via text-to-speech translation.

In response to selection of the tile, an indication of a position in the book at which the reader is being returned to may be temporarily overlaid on book content that is displayed. The indication of a position may include a chapter number or title and a page number. A particular tile in the band of tiles may represent a book, subscription to a periodical or other content, and/or may represent a group of books or subscriptions, such as a collection of recommendations.

Hence, certain embodiments discussed herein may facilitate user access to desired books by conveniently arranging books in a scrollable band of tiles, i.e., strand, herein the books may be arranged in accordance with a likelihood that a user will wish to access the book, e.g., in accordance with a time of use or download. Furthermore, use of the tiles may provide convenient information, such as indications as to where a user left off reading content; bookmarks, recommendations, and so on, which may facilitate more expedient access to desired content. Furthermore, enabling convenient placement of commercial recommendations in a strand may facilitate ecommerce.

A further understanding of the nature and the advantages of particular embodiments disclosed herein may be realized by reference of the remaining portions of the specification and the attached drawings.

### Brief Description of the Drawings

Embodiments of the invention will now be described with reference to the accompanying drawings, throughout which like parts are referred to by like references, and in which:
Fig. 1 is a diagram illustrating an example system for facilitating user access to electronic books and related content, such as book recommendations.
Fig. 2 is a diagram illustrating a first example user interface display screen that includes a main menu for accessing digital content, including a books menu for accessing books and related content.
Fig. 3 is a diagram illustrating a second example user interface display screen, which is accessible via the books menu of Fig. 2 and includes a book strand representing a horizontally scrollable band of plural adjacent book tiles.
Fig. 4 is a diagram illustrating a third example user interface display screen showing a books menu, which is accessible by selecting a book header of the strand of Figs. 3-4 or via another user input, such as a long press on a background of the user interface of Fig. 3.
Fig. 5 is a diagram illustrating a fourth example user interface display screen showing a chapter/page indicator temporarily overlaid on book content, wherein the chapter/page indicator may be displayed in response to user selection of a book tile from the user interface of Fig. 3.
Fig. 6 is a diagram illustrating a fifth example user interface display screen showing page turning zones and page turning user interface controls overlaid on book content.
Fig. 7 is a diagram illustrating a sixth example user interface display screen showing an overlaid book menu, which is overlaid over book content in response to certain user input, such as a long press on book content.
Fig. 8 is a flow diagram of an example method that is adapted for use with the embodiments of Figs. 1-7.

### Detailed Description

For the purposes of the present discussion, books, also called electronic books herein, may include any media that is adapted to convey language content, e.g., via electronic text, audio files, and so on. Examples of books include electronic newspapers, digital representations of physical books, electronic periodicals, audiobooks, various websites, Internet blogs, and so on.

For clarity, certain well-known components, such as hard drives, processors, power supplies, operating systems, Application Programming Interfaces (APIs), Internet Service Providers (ISPs) and so on, have been omitted from the figures. However, those skilled in the art with access to the present teachings will know which components to implement and how to implement them to meet the needs of a given implementation.

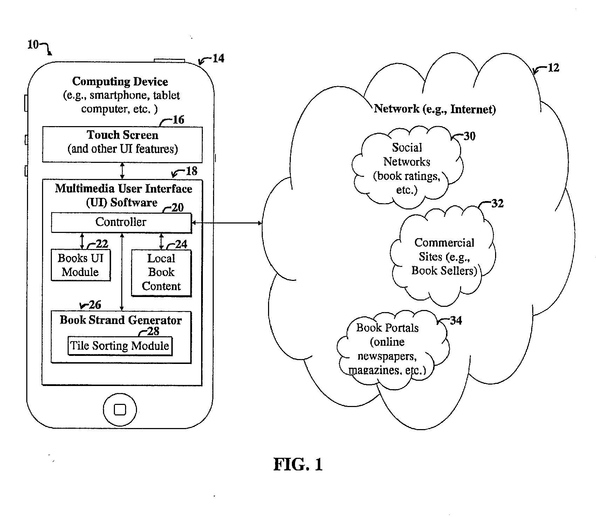

Fig. 1 is a diagram illustrating an example system 10 for facilitating user access to book content, i.e., books and related content, such as book recommendations. The system 10 includes an electronic computing device such as computing device 14. Computing device 14 can include a desktop computer, game console, or a mobile computing device, such as a tablet, smartphone, etc. The computing device 14, also called a computer herein, communicates with a network 12, such as the Internet, to selectively access book content from social networks 30, commercial sites 32 (such as websites of book sellers), book portals 34, and so on. Book content provided via the various sites 30-34 may include book downloads, server-side books, book ratings, book readership statistics, book recommendations from a user's social network, and so on.

For illustrative purposes, the computing device 16 is shown including a touch screen 16 in communication with multimedia user interface software 18. The multimedia user interface software 18 is adapted to provide various user interface displays and accompanying features for implementing various methods for accessing books, as discussed more fully below.

The example multimedia user interface software 18 includes a controller 20, which includes computer code for coordinating user inputs from the touch screen 16 with various functionality and data implemented via modules 22-28, which communicate therewith. For example, a books user interface module 22 includes computer code for implementing various menus for accessing book content. The local book content 24 includes downloaded books (e.g., software code and data for facilitating rendering book content), book metadata, and so on.

A book strand generator 26 includes computer code for generating displaying bands of tiles, i.e., strands, corresponding to books or other book content or groups of book content. The book strand generator 26 includes a tile sorting module 28, which includes computer code for sorting tiles in a strand.. In a preferred embodiment, the tiles are included in 3 groups. A first group is sorted according to most recently downloaded or obtained (i.e. "recency" of download). A second group follows the first group and is sorted according to most recently used (e.g., accessed or opened). A third group includes recommended books. The recommendations can take into account ratings from a social network, friends' recommendations, etc. The book strand generator 26 may be incorporated in the books user interface module 22, without departing from the scope of the present teachings.

For the purposes of the present discussion, a tile may be any region of a user interface display screen that is distinguished from a surrounding region of the display screen and represents a computing object. A computing object may be any collection of data and/or functionality, such as electronic media, including, but not limited to books, movies, games, and collections or groups thereof. A tile may have certain functionality associated therewith and may act as a user interface control for triggering display of menus, accessing electronic content associated with a tile. Electronic content associated with a tile may include electronic media, e.g., books, games, and so on, and my further include metadata associated with or characterizing or describing the media. However, the tiles discussed herein are primarily associated with books, groups of books, and/or content or information related to books, such as book recommendations or special offers.

For the purposes of the present discussion, the term "recency of use" of electronic media, such as a book, refers to the last time at which the media was accessed, manipulated, or downloaded. Hence, a first book that has just been downloaded but not yet accessed may be considered more recent used than a second book that was previously downloaded and accessed or read before the first book was downloaded. "Time of use" is used to compare the times of use of two or more books for purposes of sorting or ranking the books to determine a presentation order in the band. The time of use can be used to sort books so that most recently used are listed first, most recently used are listed last, or by using the time of use in other ways to perform sorting such as by giving a higher ranking to books used in the evening, books used at regular intervals, books used on holidays or birthdays, etc. Similarly a "time of downloading" is used to compare the times of download of two or more books.

The controller 20 may further include computer code for selectively accessing remote content via the network 12, e.g., from the social networks 30, commercial sites 32, book portals 34, and so on, in response to certain user input from the touch screen 16 and books user interface module 22.

Hence, the multimedia user interface software 18 is adapted to employ remote book content from the network 12, local book content 24, and user input via the touch screen 16 in combination with special user interface functionality implemented via the books user interface module 22, to facilitate efficient user access to books and related content, as discussed more fully below.

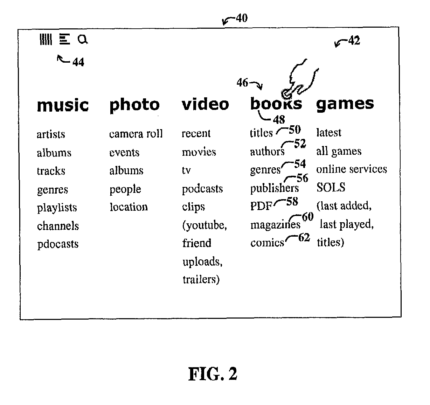

Fig. 2 is a diagram illustrating a first example user interface display screen 40 that includes a main menu 42 for accessing digital content, including a books menu 46 for accessing books and related content.

The example user interface display screen 40 further includes persistent user interface controls 44 for enabling transition from the main menu 42 to a strand view, where various types of multimedia, e.g., music, photos, video, books, and books, may be accessed via different strands; for enabling transition back to the main menu 42, and so on.

For the purposes of the present discussion, a user interface control may be any element displayed via a user interface that is associated with or responsive to a particular user input or set of user inputs to implement a feature or action associated with the user interface. Examples of user interface controls include menu items, buttons, icons, tools in toolbars, search fields, and so on.

The example books menu 46 includes a first books header 48, and various menu items 50-62, including a first option 50 to display a user interface screen for browsing or searching for book titles; a second option 52 to browse content by book author; a third option 54 to browse content by genre; a fourth option 56 to browse content by publisher; a fifth option 58 to browse books stored in Portable Document Format (PDF); a sixth option 60 to browse or access electronic magazine content; and a seventh option 62 to browse comic content. Note that additional, fewer, and/or different menu options may be provided in the books menu 46, without departing from the scope of the present teachings.

In the present example embodiment, user selection of the books header 48, such as via a single finger tap in the books header 48, may trigger display of a horizontally scrollable band of book tiles, i.e., a book strand, as discussed more fully below.

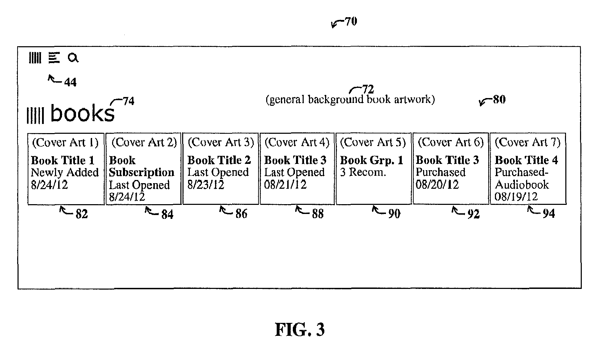

Fig. 3 is a diagram illustrating a second example user interface display screen 70, which is accessible via the books menu 46 of Fig. 2 and includes a book strand 80 representing a horizontally scrollable band of plural adjacent book tiles 82-94. The strand 80 may be scrolled, e.g., in response to a horizontal finger swipe across the display screen 70. Scrolling may shift the positions of the tiles 82-94 in accordance with the direction of the swipe used to initiate the scroll.

For the purposes of the present discussion, a first tile is said to be adjacent to a second tile if the first tile and second tile are positioned in proximity to each other in a user interface display screen, such that no intervening tiles are displayed between the first tile and the second tile. Hence, tiles that abut each other are considered adjacent, but adjacent tiles do not necessarily abut each other.

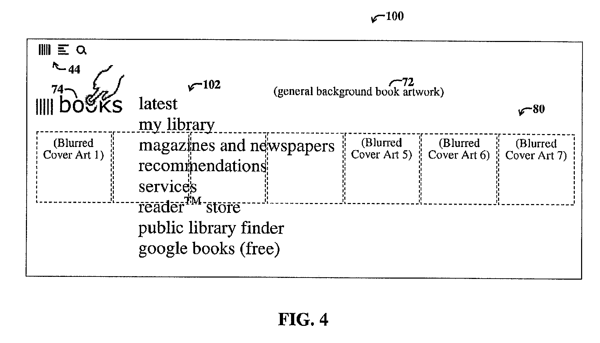

The second example user interface display screen 70 shows a strand books header 64, which may be selected by a user to trigger display of a menu, as discussed more fully below, e.g., with reference to Fig. 4.

The book strand 80 is overlaid upon background game artwork 72, which is automatically chosen by the underlying user interface software to be representative of one or more books of the book strand 70. Exact methods for choosing the background game artwork 72 are application specific and may be readily determined by those skilled in the art with access to the present teachings, to meet the needs of a given implementation, without undue experimentation.

Each of the adjacent tiles 82-94 include cover art corresponding to or otherwise associated with the book or group of books associated with a given title.

For the purposes of the present discussion, cover art for electronic media may be any artwork or representation of artwork that is employed for marketing electronic media. For example, in certain cases, cover art for a music album may correspond to the artwork displayed on physical copies of a Compact Disc (CD) case or Digital Video Disc (DVD) case. Similarly, cover art for a book may correspond to the artwork displayed on a physical book and/or the book cover art may represent digital artwork used to market a book online or other digital print media.

In the present example, embodiment, the tiles 82-94 of the strand 80 are arranged according to recency of use, from left to right. In particular, a book title, such as represented via the first book tile 82, which has been newly downloaded or otherwise added to or logged with the underlying user interface software, but which has not yet been accessed or read, is positioned in the leftmost position of the strand 80. The second position in the strand, such as corresponding to the second book tile 84, represents the most recently accessed or read book or group of books. For illustrative purposes, the second book 84 is shown as representing a book subscription, such as a subscription to an electronic version of a periodical or magazine.

The third book tile 86 represents the next most recently accessed book; the fourth book tile 88 represents the next most recently accessed book relative to the book of the third book tile 86, and so on. For illustrative purposes, the fifth book tile 90 is shown as representing a group of three recommended books. User selection of the fifth book tile 90 may result in display of a user interface display screen that presents tiles or menu items corresponding to recommended books to facilitate user access thereto. The sixth book tile 92 and seventh book tile 94 represent purchased books that have yet to be accessed, which are positioned in the strand 80 according to recency of purchase, such that the sixth book tile 92 was purchased more recently than the seventh book tile 94. Note that the tiles corresponding to purchased books, e.g., the tiles 92, 94, may be represented by, i.e., grouped into a single tile, without departing from the scope of the present teachings. In certain implementations, all tiles associated with purchased books, which may include the first book tile 82, that have yet to be accessed by a user are grouped into a single tile.

Exact sorting rules for sorting the tiles 82-94 are implementation specific and may vary. Generally, the sorting rule for the tiles 82-94 will sort books in accordance with predetermined user preferences, such that books that a user is most likely to wish to access are positioned in a most prominent positions, i.e., the left most positions in the strand 80.

In certain implementations, the book tiles 82-94 may include separate tiles for different recommended books. In such implementations, the recommended books that have yet to be accessed may be sorted according to a recommendation score, such as a user rating obtained from users of a social network, e.g., a friend network, associated with a user of the underlying user interface software discussed herein.

Book ratings may be obtained directly from websites that provide book rating scores, or rating scores may be calculated by the underlying software based on readership frequency among a user's social network friends, and so on. Book recommendations may also be based on other factors, such as similarities of recommended books with books or book types that a user most frequently reads, and so on. Additional book recommendations may be provided by commercial entities (e.g., via entity-specific recommendation algorithms), such as online bookstores and magazines, and presented via one or more tiles, such as via the fifth tile 90.

As suggested above, exact methods for sorting the tiles 82-94 of the strand may vary without departing from the scope of the present teachings. For example, in certain implementations, a most recently accessed book may appear ahead of a downloaded book that has not been accessed, even if the downloaded book was downloaded more recently than that recently accessed book was accessed.

Furthermore, in certain implementations, for example, a downloaded book (i.e., tile corresponding thereto) that was downloaded three weeks ago may still appear ahead of a book that was accessed three hours ago. In other implementations, a tile of recently downloaded book may only appear in the left most position without being accessed for a predetermined time interval. Furthermore, user options for enabling changing a sorting rule; for manually positioning tiles, and so on, may be provided, without departing from the scope of the present teachings.

Note that while the strand 80 shows seven book tiles, that more or fewer tiles may be present in a given strand, and that any additional tiles may be accessed via scrolling of the strand 80. Furthermore, sizes of tiles and relative spacings may also vary. Furthermore, the tiles may be staggered or overlapped or otherwise arranged differently than shown in Fig. 3, without departing from the scope of the present teachings.

In the present specific embodiment, user selection of one of the tiles 82-94, such as via a touch screen tap gesture, may trigger a change in the background book artwork 62 and may reflect of the cover art of the selected book tile. A two-finger tap gesture outside of the strand 80 may trigger display of the first user interface display screen 40 of Fig. 2 and accompanying main menu 42. A two-finger horizontal swipe applied to the strand 80 may trigger display of a different strand, such as a strand for accessing electronic games and related content. A single tap gesture outside of the region defined by the strand 80 may trigger backward navigation to a most recently viewed user interface display screen, such as the user interface display screen 40 of Fig. 2.

Note that various gestures used to control user interface display features discussed herein may vary depending upon the implementation. For example, implementations of embodiments discussed herein may be run on computers that do not have a touch screen. In these cases, mouse controls or other user input mechanisms may be employed to navigate user interface display screens and access various functionality associated therewith.

Fig. 4 is a diagram illustrating a third example user interface display screen 100 showing a strand books menu 102, which is accessible by selecting a book header 74 of the strand 80 of Figs. 3-4 or via another user input, such as a long press on a background 72 of the user interface 70 of Figs. 3-4.

In the present example embodiment, the strand 80 and accompanying cover art is blurred, as is the background art 72, coincidently with display of the books strand menu 102. The menu 102 includes a transparent background, such that the text of the menu 102 appears to directly overlay a portion of the blurred strand 80.

Examples of user options provided via the book strand menu 102 include a first user option to trigger display of only the latest or most recently accessed book or set of books, where the latest or most recently accessed books include only books that have been accessed within a certain predetermined time interval and/or in accordance with other recency criteria.

A second menu option of the books strand menu 102 represents a user option to access or display a library of books. The library of books may include separate sections for subscriptions, digitized paper books, magazines, and so on. Exact partitioning of sections of the library may vary depending upon the implementation. The library may include several book tiles corresponding to different books in the library. The library may iriclude various features, such as user options to perform particular searches, perform sorting based on user selected criteria, and so on.

A third menu option of the books strand menu 102 represents a user option to access or display magazines and newspapers and/or tiles corresponding thereto.

A fourth menu option of the books strand menu 102 represents a user option to access recommendations of books, such as via a collection of tiles corresponding to recommended books.

A fifth menu option of the books strand menu 102 represents a user option to access books-related services, such as customer service or other services.

A sixth menu option of the books strand menu 102 represents a user option to access an online book store, such that selection of the fifth menu option may transition the user interface display screen 100 to a user interface display screen provided by an online book seller.

A seventh menu option of the books strand menu 102 includes a user option to access user interface functionality for finding a public library.

A eighth example menu option of the books strand menu 102 represents a user option to access a provider of free books.

Note that various user options presented via the books strand menu 92 may vary. For example, additional menu items may be added or the menu items may be replaced with other menu items, without departing from the scope of the present teachings. For example, additional or alternative menu options include an option to view all purchased or downloaded books that have yet to be accessed, or an option to view all accessed books that a user has not completed reading, or an option to view all accessed books that a user has finished reading, and so on.

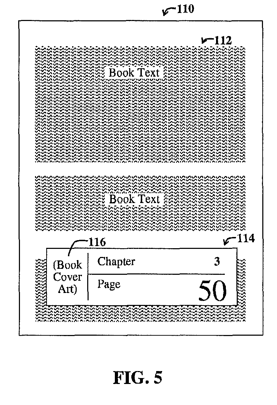

Fig. 5 is a diagram illustrating a fourth example user interface display screen 110 showing a chapter/page indicator 114 temporarily overlaid on book content. The chapter/page indicator 114 is may be displayed in response to user selection of a book tile from the strand of Fig. 3.

The chapter/page indicator 114 includes an indication of a chapter number, e.g., chapter 3, and a page number, e.g., page 50, which represent a position at which a user last left off reading the book text 112. The chapter/page indicator 114 includes a sampling of book cover art 116 positioned at a left portion of the chapter/page indicator. The chapter/page indicator 114 may include additional information, such as chapter name, information indicating whether the position represents a bookmark, book title information, additional book metadata, and so on, without departing from the scope of the present teachings.

The chapter/page indicator 114 may persist for a few seconds or other predetermined time interval, before it disappears from the user interface display screen 110. The exact time interval over which the chapter/page indicator 114 persists is implementation specific and may vary.

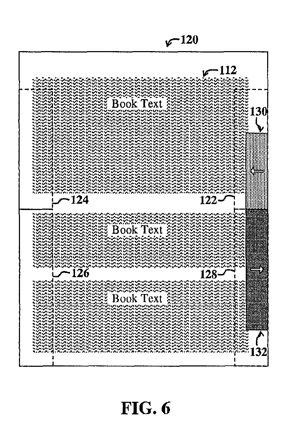

Fig. 6 is a diagram illustrating a fifth example user interface display screen 120 showing page turning zones 122-128 and page turning user interface controls 130, 132, overlaid on book content 112. In practice, the page turning zones 122-128 are invisible to the user, but are touch sensitive, such than when one or more of the zones 122-128 is touched, e.g., tapped or pressed, the page turning user interface controls 130, 132 appear on the side of the content 112 at which the user touched the display 120 to activate display of the page turning user interface controls 130, 132.

The first page turning user interface control 130 triggers transitioning the text 112 to a previous page, i.e., acts as a back button to go back one page. Similarly, the second page turning user interface control 132 triggers transitioning of the text 112 to a subsequent page, i.e., acts as a forward button to go forward on page in the book.

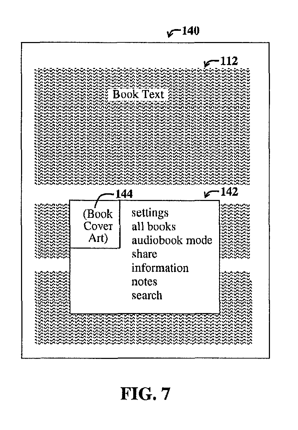

Fig. 7 is a diagram illustrating a sixth example user interface display screen 140 showing an overlaid book menu 142, which is overlaid over book content 112 in response to certain user input, such as a long press on book content 112.

The overlaid book menu 142 shows a sampling of book cover art 144 in the upper left of the overlaid menu 142 and includes various menu items. Examples of menu items that may be included in the overlaid book menu 142 include a user option to access settings governing the behavior of the underlying user interface software components used to navigate book content; a user option to transition the user interface display screen 140 to a display of all books (e.g., as represented via book tiles) logged with the underlying user interface software; a user option to transition the underlying user interface software to audiobook mode; a user option to share the book content 112 with other users of a social network that is in communication with the underlying user interface software; a user option to access additional information related to the book content 112, such as book metadata; a user option to take notes pertaining to the content 112; and a user option to activate search functionality, e.g., to search for other books.

When a user selects audiobook mode from the overlaid menu 142, underlying text-to-speech functionality is activated to conversion of the book textual content 112 into audio language content. The audio language content may be played back through speakers included with the computing device used to run the underlying user interface software.

Tapping outside of the book text area 112 may trigger display of another control bar or widget with user interface controls (not shown) for accessing a table of contents, jumping to a different position in a book, zooming in and out, accessing additional metadata (via infinity icon), displaying a progress slider, adding bookmarks, jumping to bookmarks, and so on.

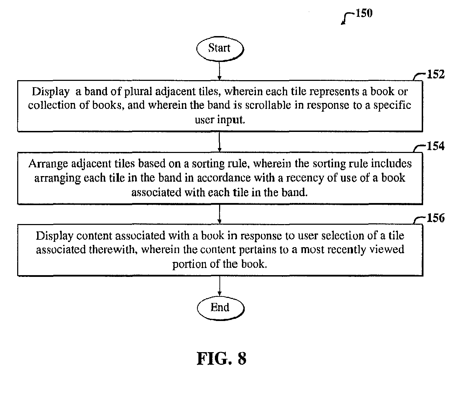

Fig. 8 is a flow diagram of an example method 150 that is adapted for use with the embodiments of Figs. 1-7. The example method includes a first step 152, which involves displaying a band of plural adjacent tiles, wherein each tile represents a book or collection of books, and wherein the band is scrollable in response to a specific user input.

A second step 154 includes arranging adjacent tiles based on a sorting rule, wherein the sorting rule includes arranging each tile in the band in accordance with a recency of use of a book associated with each tile in the band.

A third step 156 includes displaying content associated with a book in response to user selection of a tile associated therewith, wherein the content pertains to a most recently viewed portion of the book.

Although a process of the present invention may be presented as a single entity, such as software executing on a single machine, such software can readily be executed on multiple machines. That is, there may be multiple instances of a given software program, a single program may be executing on two or more processors in a distributed processing environment, parts of a single program may be executing on different physical machines, etc.

In the description herein, numerous specific details are provided, such as examples of components and/or methods, to provide a thorough understanding of embodiments of the present invention. One skilled in the relevant art will recognize, however, that an embodiment of the invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

### Page: 10

Although the description has been described with respect to particular embodiments thereof, these particular embodiments are merely illustrative, and not restrictive. For example, while certain touch gestures are employed to provide inputs to a touch screen to interact with a graphical user interface, gestures other than those discussed may be employed, and implementations that do not employ touch screens and touch gestures are possible.

Although a "band" or "strand" or other series or collection of tiles may be depicted having a particular shape, orientation or direction, it should be apparent that other arrangements are possible. For example, a band may have tiles presented in a particular direction such as left-to-right in the illustrations but is should be apparent that the band can also have the tiles presented or prioritized in a right-to-left manner. A band need not be horizontal but can be in vertical, diagonal, or other directions. Other variations are possible.

Any suitable programming language can be used to implement the routines of particular embodiments including C, C++, Java, assembly language, etc. Different programming techniques can be employed such as procedural or object oriented. The routines can execute on a single processing device or multiple processors. Although the steps, operations, or computations may be presented in a specific order, this order may be changed in different particular embodiments. In some particular embodiments, multiple steps shown as sequential in this specification can be performed at the same time.

Particular embodiments may be implemented in a computer-readable storage medium for use by or in connection with the instruction execution system, apparatus, system, or device. Particular embodiments can be implemented in the form of control logic in software or hardware or a combination of both. The control logic, when executed by one or more processors, may be operable to perform that which is described in particular embodiments.

Particular embodiments may be implemented by using a programmed general purpose digital computer, by using application specific integrated circuits, programmable logic devices, field programmable gate arrays, optical, chemical, biological, quantum or nanoengineered systems, components and mechanisms may be used. In general, the functions of particular embodiments can be achieved by any means as is known in the art. Distributed, networked systems, components, and/or circuits can be used. Communication, or transfer, of data may be wired, wireless, or by any other means.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It will also be appreciated that one or more of the elements depicted in the drawings/figures can also be implemented in a more separated or integrated manner, or even removed or rendered as inoperable in certain cases, as is useful in accordance with a particular application. It is also envisaged to implement a program or code that can be stored in a machine-readable medium to permit a computer to perform any of the methods described above.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

Additionally, any signal arrows in the drawings/figures should be considered only as exemplary, and not limiting, unless otherwise specifically noted. Furthermore, the term "or" as used herein is generally intended to mean "and/or" unless otherwise indicated. Combinations of components or steps will also be considered as being noted, where terminology is foreseen as rendering the ability to separate or combine is unclear.

Thus, while particular embodiments have been described herein, latitudes of modification, various changes, and substitutions are intended in the foregoing disclosures, and it will be appreciated that in some instances some features of particular embodiments will be employed without a corresponding use of other features without departing from the scope of the invention. Therefore, many modifications may be made to adapt a particular situation or material to the essential scope of the invention.

## Claims

1. A method for accessing books, the method comprising the following acts performed by an electronic computing device:
displaying a band of plural adjacent tiles, wherein each tile represents one or more books;
accepting a signal from a user input device to scroll the band in a direction; and
arranging adjacent tiles based on a sorting rule, wherein the sorting rule includes arranging each tile in the band in accordance with a time of downloading and a time of use of a book associated with each tile in the band.

2. The method of claim 1, further including displaying content associated with a book in response to user selection of a tile associated therewith, wherein the content pertains to a most recently viewed portion of the book.

3. The method of claim 1, further including presenting a first menu pertaining to the band in response to a first user input applied to a header or other region about the band, the first menu including one or more user options for performing one or more actions applicable to one or more of the tiles of the band and one or more books associated therewith.

4. The method of claim 3, wherein the one or more user options include a user option to access one or more recommendations of content based on content present in the band of plural adjacent tiles.

5. The method of claim 3, wherein the one or more user options include an option to access a library of books.

6. The method of claim 1, further including providing a user option to select a tile of the band, resulting in a display of content associated with the tile in response thereto.

7. The method of claim 6, wherein the content associated with the tile includes a page of an electronic book corresponding to a most recently user accessed page of the book.

8. The method of claim 6, further including, in response to the selection of a tile of the band, displaying an enlarged representation of the selected tile when a book associated with selected tile has not yet been accessed.

9. The method of claim 10, further including providing a user option to select the enlarged tile, resulting in display of most recently viewed content of the book corresponding to the enlarged tile.

10. The method of claim 6, further including providing a user option to navigate pages in the electronic book via one or more user interface controls positioned adjacent to a display of content of the book.

11. The method of claim 10, further including providing a user option to trigger audio recitation of text in the book.

12. The method of claim 6, further including, in response to selection of the tile, displaying an indication of a position in the book at which the reader is being returned to and displaying book content corresponding to the indicated position.

13. The method of claim 1, wherein one or more tiles of the band of plural adjacent tiles represents a group of user readable content.

14. An apparatus comprising:
a digital processor coupled to a display and to a processor-readable storage device,
wherein the processor-readable storage device includes one or more instructions executable by the digital processor to perform the steps of the method of any one of claims 1 to 13.

15. A processor-readable storage device including instructions executable by a digital processor, the processor-readable storage device including one or more instructions for performing the steps of the method of any one of claims 1 to 13.
